# EUROPÄISCHE PATENTSCHRIFT

(11) **EP 1 668 952 B1**
(45) Veröffentlichungstag und Bekanntmachung des Hinweises auf die Patenterteilung: **11.11.2015**
(21) Anmeldenummer: 04787133.0
(22) Anmeldetag: 13.09.2004
(51) Int. Cl.: H04W 72/12

(54) **VERFAHREN ZUR DATENÜBERTRAGUNG MIT REDUZIERTER WAHRSCHEINLICHKEIT VOM FÄLSCHLICHEN VERWERFEN VON DATEN**
DATA TRANSMISSION METHOD WITH A LOWER PROBABILITY OF ERRONEOUS REJECTION OF DATA
PROCEDE DE TRANSMISSION DE DONNEES AVEC UNE PROBABILITE REDUITE DE REJET ERRONE DE DONNEES

(30) Priorität: 29.09.2003 DE 10345638
(43) Veröffentlichungstag der Anmeldung: 14.06.2006
(73) Patentinhaber: Siemens Aktiengesellschaft, 80333 München (DE)
(72) Erfinder: MICHEL, Jürgen, 81737 München (DE); RAAF, Bernhard, 82061 Neuried (DE)
(86) Internationale Anmeldenummer: PCT/EP2004/052148
(87) Internationale Veröffentlichungsnummer: WO 2005/032194

(56) Entgegenhaltungen:
- US-A1- 2003 192 003
- SIEMENS: "Clarification of HS-SCCH reception." 3GPP TSG-RAN WG1 MEETING NO. 34, [Online] Nr. 031113, 10. Oktober 2003 (2003-10-10), XP002319290 SEOUL, KOREA Gefunden im Internet: URL:http://www.3gpp.org/ftp/tsg_ran/WG1_RL 1/> [gefunden am 2005-02-25]
- DENIS FAUCONNIER: "LS on delivery of wrong data to upper layers for HSDPA" 3GPP TSG-RAN WG1 NO. 31, [Online] Nr. 030336, 21. Februar 2003 (2003-02-21), XP002319294 TOKYO, JAPAN Gefunden im Internet: URL:http://www.3gpp.org/ftp/tsg_ran/WG1_RL 1/> [gefunden am 2005-02-25]

## Beschreibung

Die Erfindung betrifft ein Verfahren zur Datenübertragung in einem Kommunikationsnetz, insbesondere einem zellularen Funknetz, bei dem Daten, insbesondere Datenpakete eines paketorientierten Datendienstes, über einen gemeinsam von mehreren Mobilstationen genutzten Datenkanal übertragen werden und zur Signalisierung für welche spezifische(n) Mobilstation(en) die Daten bestimmt sind mehrere gemeinsam genutzte Steuerkanäle verwendet werden.

In UMTS (Universal Mobile Telecommunication System) werden über den Hochgeschwindigkeits-Abwärtsverbindungskanal bzw. "High-Speed Downlink Shared Channel" (HS-DSCH) Datenpakete zu einer Mobilstation bzw. "User Equipment" (UE) gesendet. Die zugehörige Kontrollinformation wird parallel über den Hochgeschwindigkeits-Kontrollkanal "High-Speed Shared Control Channel" (HS-SCCH) übertragen. Davon sind maximal vier HS-SCCH einer Mobilstation zugeordnet. Damit die empfangende Mobilstation erkennen kann, dass die Information auf dem HS-SCCH und die Daten auf dem HS-DSCH für sie bestimmt sind, wird die Kontrollinformation mit einer Mobilstation spezifischen Identifikationsinformation verknüpft. Für genauere Begriffsdefinitionen sei im Folgenden auf die Figurenbeschreibung verwiesen.

In UMTS ist der HS-DSCH gegenüber dem HS-SCCH um zwei Zeitschlitze verschoben und jeweils drei Zeitschlitze sowohl des HS-SCCH als auch des HS-DSCH entsprechen einer Informationseinheit der physikalischen Schicht (die Dauer einer Informationseinheit der physikalischen Schicht bezeichnet man als Teilrahmen).

Neben der Mobilstation-spezifischen Identifikationsinformation enthält eine Einheit des HS-SCCH außerdem die Information über
- die verwendeten HS-DSCH Spreizcodes bzw. "Spreading Codes" oder "Channelisation-Codes" oder Kanalcodierungsinformation,
- das Modulationsschema, beispielsweise QPSK ("Quadrature Phase Shift Keying") oder 16QAM ("16 Quadrature Amplitude Modulation"),
- die Anzahl der Datenbits, die von der physikalischen Schicht an die nächst höhere Schicht übergeben werden,
- den Indikator, ob es sich um eine erste Datenübertragung oder eine Wiederholung der Daten handelt,
- die HARQ Prozessnummer,
- die Information bezüglich der verwendeten Abbildungsvorschrift der Datenbits auf die 16QAM-Modulation und bezüglich des verwendeten Ratenanpassungsmusters.

Die Information bezieht sich jeweils auf die 2 Zeitschlitze später übertragene HS-DSCH Informationseinheit.

In UMTS muss eine Mobilstation bis zu vier HS-SCCH überwachen, wenn sie nicht schon in der unmittelbar vorangegangenen HS-SCCH Einheit für sie bestimmte Daten erhalten hat. Im Folgenden wird ein Beispiel mit 4 HS-SCCH's gewählt, ebenso ist aber auch eine andere Anzahl möglich, wie etwa 2 oder 3. Umgekehrt heißt es im UMTS Standard, dass eine Mobilstation, die für sie bestimmte Kontrollinformation auf einem der HS-SCCH erhält, im darauffolgenden Intervall der Länge von drei Zeitschlitzen nur noch einen HS-SCCH überwacht, und zwar den HS-SCCH, auf dem die Kontrollinformation zuvor empfangen wurde. Grund dafür ist, dass dadurch Teile der Empfängerhardware, die für den HS-SCCH Empfang benötigt werden, im Falle der Datenübertragung auf dem HS-DSCH für den HS-DSCH-Empfang verwendet werden können und somit insgesamt weniger Ressourcen benötigt werden. Man spricht hierbei von der Planungsregel für aufeinander folgende Zeitschlitze bzw. "consecutive scheduling rule".

Weiterhin werden in UMTS unterschiedlichen Kategorien von Mobilstationen, d.h.Mobilstationen mit unterschiedlichen Leistungsmerkmalen, verwendet. Bezogen auf die Paketorientierte Hochgeschwindigkeits-Datenübertragung unterscheidet sich eine Mobilstation je nach ihrer Kategorie insbesondere in den folgenden Fähigkeiten
- der maximalen Anzahl der HS-DSCH Channelisation-Codes, welche sie gleichzeitig in einer HS-DSCH Einheit empfangen und verarbeiten kann,
- dem minimalen zeitlichen Abstand zwischen zwei aufeinanderfolgenden Datenübertragungen auf dem HS-DSCH welche sie verarbeiten kann,
- dem Modulationsschema (QPSK, 16 QAM) welches sie verarbeiten kann,
und weiterer Parameter.

Außerdem wird der physikalischen Schicht über Signalisierung durch höhere Schichten des OSI(Open System Interconnection)-Modells (die Anzahl der hybriden automatischen Wiederholungsanforderungsprozesse bzw. "Hybrid Automatic Repeat Request" HARQ Prozesse und die maximale Transportblockgröße bzw. Paketgröße mitgeteilt.

Nichtkonsistente Information ist im Falle von UMTS beispielsweise, wenn die in der HS-SCCH Einheit übertragene Anzahl der verwendeten HS-DSCH Channelisation-Codes größer ist, als die Anzahl der HS-DSCH Channelisation-Codes, welche die Mobilstation entsprechend ihrer Kategorie maximal verarbeiten können muss oder/und wenn die Nummer des HARQ Prozesses höher ist, als die Anzahl der für diese Mobilstation konfigurierten HARQ Prozesse.

Stellt eine Mobilstation fest, dass die Information in einer HS-SCCH Einheit, die sie entsprechend ihrer Identifikation als an sie gerichtet bewertet, nicht konsistente Information enthält, so kann die physikalische Schicht in diesem Falle die Daten verwerfen und nicht weitergeben. Dieses Vorgehen hat den Vorteil, dass dann die Wahrscheinlichkeit einer Übergabe fehlerhafter Datenpakete von der physikalischen Schicht an höhere Schichten reduziert wird, indem solche Pakete, die anscheinend inkonsistente Informationen enthalten herausgefiltert werden. Da die inkonsistente Kontrollinformation selbst nicht an höhere Schichten weitergegeben wird, da sie nur in der physikalischen Schicht benötigt wird, kann eine solche Filterung auch nur in der physikalischen Schicht durchgeführt werden. Inkonsistente Daten können auf höheren Schichten unter Umständen zu gravierendem Fehlverhalten führen, daher wurde bei der Spezifikation von UMTS großer Wert darauf gelegt, dies so gut wie möglich zu vermeiden. Neben weiteren Verfahren wie Prüfsummen Tests ist die beschriebene Konsistenzüberprüfung ein Verfahren zum Vermeiden eines solchen Fehlverhaltens.

Es kann nun sein, dass durch eine solche Konsistenzüberprüfung auch Daten verworfen werden, welche tatsächlich korrekt empfangen werden könnten: Beispielsweise kann es sein, dass eine Mobilstation aufgefordert wird, 5 HS-DSCH Spreizcodes bzw. "Channelisation-Codes" zu verwenden, was ihrer maximalen Möglichkeit entspricht. Durch Fehler in der Übertragung kann es nun sein, dass die Mobilstation fälschlich glaubt, 15 Codes empfangen zu müssen. Wenn sie nun stattdessen die ihr maximal mögliche Anzahl von Codes, nämlich 5 empfängt, so hätte sie durch dieses Vorgehen die falsche Übertragung der Kontrollinformation korrigiert. Die Mobilstation soll aber nicht versuchen, Fehler in der Kontrollinformation zu korrigieren, sondern stattdessen Fehler zu detektieren und ggf. gesamte Datenrahmen zu verwerfen.

Dies hat den Nachteil, dass Daten fälschlicherweise verworfen werden.

Aus der Panasonic-Publikation "Clarification of HS-SCCH reception", 3GPP TSG RAN WG1-Meeting No.33, 25.August 2003, R1-030866 ist ein Konsistenzcheck bekannt, der die Übergabe von fehlerhaften Daten von Schicht 1 zur Schicht 2 eines Benutzergerätes (User Equipment, UE) verringert. Der Check basiert auf der Grundlage, dass
(i) das Benutzergerät alle Steuerkanäle (HS-SCCH) eines Set von Steuerkanälen abhört, wenn von dem Benutzergerät im unmittelbar vorhergehenden Unterzeitrahmen (subframe) keine für das Benutzergerät bestimmte Steuerinformation auf einem der Steuerkanäle des Steuerkanal-Set erkannt worden ist und
(ii) es für das Benutzergerät ausreicht, ausschließlich den gleichen Steuerkanal wie im vorausgegangenen Unterzeitrahmen abzuhören, wenn von dem Benutzergerät im unmittelbar vorhergehenden Unterzeitrahmen eine für das Benutzergerät bestimmte Steuerinformation erkannt worden ist,
   und ist durch folgende Eigenschaften charakterisiert:
   Wenn das Benutzergerät die Steuerkanäle des Steuerkanal-Set abhört, dann soll von dem Benutzergerät auch geprüft werden, ob eine dekodierte "channelization-code-set information" kleiner oder gleich der "maximum number of HS-DSCH codes received" ist, die das Benutzergerät entsprechend seinen Einsatzmöglichkeiten empfangen und verarbeiten kann. Sollte diese Bedingung nicht erfüllt sein, so wird das Benutzergerät die über diesen abgehörten Steuerkanal empfangene Steuerinformation verwerfen. Darüber hinaus soll.von dem Benutzergerät auch geprüft werden, ob eine "Hybrid-ARQ process information" in dem Steuerkanal-Set enthalten ist, die durch höhere Schichten festgelegt ist. Sollte auch diese Bedingung nicht erfüllt sein, so wird das Benutzergerät die über diesen abgehörten Steuerkanal empfangene Steuerinformation verwerfen.

Ausgehend von diesem Stand der Technik ist es eine Aufgabe der vorliegenden Erfindung, eine Möglichkeit zu schaffen, das fälschliche Verwerfen von Daten in einem Kommunikationsnetz auf einfache Weise zu reduzieren.

Diese Aufgabe wird durch die unabhängigen Ansprüche gelöst. Vorteilhafte Weiterbildungen sind Gegenstand der abhängigen Ansprüche.

In einem Kommunikationsnetz werden Daten zwischen einem Terminal und einer Basisstation über einen von mehreren, d.h. zumindest zwei, Terminals benutzbaren Datenkanal übertragen. Die Daten sind dabei auf einzelne Zeitabschnitte unterteilt.

Es sind weiterhin mehrere, d.h. zumindest zwei Steuerkanäle vorgesehen, auf die das Terminal lauscht und auf einem dieser Steuerkanäle wird dem Terminal über eine Steuerinformation mitgeteilt, wenn zu einem späteren Zeitpunkt, also einem nachfolgenden Zeitabschnitt eine Datenübertragung über den Datenkanal erfolgt.

Empfängt das Terminal die Steuerinformation auf einem der Steuerkanäle, dann analysiert es deren Inhalt, insbesondere ob die Steuerinformation tatsächlich an es gerichtet ist. Die Steuerinformation weist mehrere Teile, also zumindest einen ersten Steuerinformationsanteil und einen zweiten Steuerinformationsanteil auf. Es kann dabei der erste Steuerinformationsanteil in einem ersten Zeitabschnitt und der zweite Steuerinformationsanteil in einem darauf folgenden zweiten Zeitabschnitt empfangen werden.

Jeder dieser Steuerinformationsanteile wird analysiert und auf Basis dieser Analyse wird für jeden dieser Steuerinformationsanteile ein Entscheidungsparameter generiert. Mittels dieser einzelnen Entscheidungsparameter wird ein Gesamt-Entscheidungsparameter für die Steuerinformation ermittelt, über den festgelegt wird, ob auf dem Datenkanal empfangene Daten verworfen, d.h. nicht weiterverarbeitet, insbesondere nicht an höhere Schichten des OSI Modells weitergeleitet werden sollen. Diese Verwerfung kann beispielweise in einem dem ersten oder dem zweiten Zeitabschnitt nachfolgenden dritten Zeitabschnitt erfolgen.

Durch das Zusammensetzen des Gesamt-Entscheidungsparameters aus mehreren einzelnen Entscheidungsparametern wird die Wahrscheinlichkeit einer falschen Entscheidung verringert.

Das Verfahren ist insbesondere vorteilhaft, wenn durch den Gesamt-Entscheidungsparameter auch festgelegt wird, auf welchem Kontrollkanal oder welchen Kontrollkanälen das Terminal in einem oder mehreren nachfolgenden Zeitabschnitten, z.B. dem dritten Zeitabschnitt, lauschen soll. Dies hat den Vorteil, dass der Rechenaufwand im Terminal verringert wird, wenn dieses beispielsweise nicht mehr auf alle sondern nur noch einen oder mehrere bestimmte Kontrollkanäle lauschen muss.

Insbesondere kann das Terminal auch fortfahren, auf die oben erwähnten, zumindest zwei Steuerkanäle zu hören, z.B. wenn ein Steuerinformationsanteil als nicht das Terminal betreffend eingestuft wird (beispielsweise weil die Daten vom Terminal nicht verarbeitbar sind).

In einer Weiterbildung ist es vorgesehen, dass der Gesamt-Entscheidungsparameter zwei Werte annehmen kann, beispielsweise einen positiven Wert, wenn die Steuerinformation das Terminal betrifft und einen negativen, wenn die Steuerinformation das Terminal nicht betrifft. Damit kann z.B. die Entscheidung getroffen werden, ob das Terminal auf alle Kontrollkanäle oder nur den Kontrollkanal, auf dem es die Steuerinformation empfangen hat, lauscht.

Der Gesamtentscheidungsparameter kann insbesondere derart aus den einzelnen Entscheidungsparametern zusammengesetzt werden, dass er nur dann einen positiven Wert annimmt, wenn auch alle einzelnen Entscheidungsparameter positiv sind.

Bei dem Kommunikationssystem kann es sich beispielsweise um ein UMTS System handeln.

In Bezug auf die eingangs geschilderte Situation in UMTS wird damit die Wahrscheinlichkeit verringert, dass von einem Terminal bzw. einer Mobilstation die unmittelbar auf die Übertragung einer nicht konsistenten Informationseinheit (ein HSDPA Teilrahmen) folgende Übertragung verpasst wird. Ausgangspunkt dafür ist die oben schon beschriebene Regel (Consecutive Scheduling Rule) und die Tatsache, dass es sich mit hoher Wahrscheinlichkeit um einen HS-SCCH Falschalarm handelt, wenn die Dekodierung der HS-SCCH Informationseinheit nichtkonsistente Information liefert. Somit wird verhindert, dass durch Falschalarm bei der Detektion des Kontrollkanals die Daten des nächsten Rahmens nicht empfangen werden können. Weiterhin wird in einem UMTS System wie eingangs geschildert die Wahrscheinlichkeit einen Falschalarm zu erkennen durch das Hinzunehmen weiterer Kriterien zur Konsistenzüberprüfung erhöht. (Eine Mobilstation die nur QPSK Modulation bei HSDPA unterstützt, kann durch zusätzliche Durchführung einer Konsistenzüberprüfung bezüglich des Modulationsschemas in der an sie gerichteten HS-SCCH Informationseinheit die Falschalarmwahrscheinlichkeit verringern). Ein Falschalarm ist in diesem Zusammenhang, wenn eine Mobilstation bei der Dekodierung der Identifikationsinformation fälschlicherweise annimmt, dass die Identifikationsinformation mit ihrer Identifikation übereinstimmt, obwohl von der Basisstation tatsächlich keine Aussendung für diese Mobilstation erfolgt ist, stattdessen kann eine Aussendung für eine andere Mobilstation erfolgt sein oder auch gar keine Aussendung.

Weitere Vorteile der Erfindung werden anhand ausgewählter Ausführungsbeispiele dargestellt, die in Figuren dargestellt sind. Es zeigen:
- Fig.1:: Ein Kommunikationssystem mit einer Basisstation und einem Terminal
- Fig.2:: Eine Aufteilung von Kontrollkanälen und Datenkanal in 4 Zeitschlitze

Vor einer detaillierten Darstellung der Figuren sollen zunächst verwendete Begriffe geklärt werden: Bei einem Kommunikationssystem oder Kommunikationsnetzwerk handelt es sich um eine Struktur zum Austausch von Daten. Es kann sich hierbei beispielsweise um ein zellulares Mobilfunknetzwerk handeln, wie etwa das GSM-Netzwerk (Global System of Mobile Communications) oder das UMTS-Netzwerk (Universal Mobile Telecommunications System). Ein Kommunikationsnetz umfasst zumindest zwei Verbindungsknoten, es fallen also auch sogenannte "Punkt-zu-Punkt" Verbindungen unter diesen Begriff.

In einem Kommunikationssystem sind allgemein Terminals und Basisstationen vorgesehen, die über eine Funkschnittstelle miteinander in Verbindung treten. Im UMTS weist das Kommunikationssystem oder Funkübertragungsnetzwerk zumindest Basisstationen, hier auch Node B genannt, sowie Radio Netzwerk Steuerungseinheiten bzw. Radio Network Controller (RNC) zum Verbinden der einzelnen Basisstationen auf. Das terrestrische Radio Zugriffsnetz bzw. "Universal Terrestrial Radio Access Network" UTRAN ist der funktechnische Teil eines UMTS-Netzes, in dem beispielsweise auch die Funkschnittstelle zur Verfügung gestellt wird. Eine Funkschnittstelle ist stets genormt und definiert die Gesamtheit der physikalischen und protokollarischen Festlegungen für den Datenaustausch, beispielsweise das Modulationsverfahren, die Bandbreite, den Frequenzhub, Zugangsverfahren, Sicherungsprozeduren oder auch Vermittlungstechniken. Das UTRAN umfasst also zumindest Basisstationen sowie zumindest einen RNC.

Eine Basisstation ist eine zentrale Einheit in einem Kommunikationsnetzwerk, die im Falle eines zellulären Mobilfunknetzwerks Terminals oder Kommunikationsendgeräte innerhalb einer Zelle des Mobilfunknetzwerks über einen oder mehrere Funkkanäle bedient. Die Basisstation stellt die Luftschnittstelle zwischen Basisstation und Terminal bereit. Sie übernimmt die Abwicklung des Funkbetriebs mit den mobilen Teilnehmern und überwacht die physikalische Funkverbindung. Darüber hinaus überträgt sie die Nutz- und Statusnachrichten an die Terminals. Die Basisstation hat keine Vermittlungsfunktion, sondern lediglich eine Versorgungsfunktion. Eine Basisstation umfasst zumindest eine Sende/Empfangseinheit.

Ein Terminal kann ein beliebiges Kommunikationsendgerät sein, über das ein Benutzer in einem Kommunikationssystem kommuniziert. Es fallen beispielsweise Mobilfunkendgeräte, wie Mobiltelefone oder tragbare Computer mit einem Funkmodul, darunter. Ein Terminal wird oft auch als "Mobilstation" (MS) oder in UMTS "User Equipment" (UE) bezeichnet.

Im Mobilfunk wird zwischen zwei Verbindungsrichtungen unterschieden. Die Abwärtsverbindung bzw. "Downlink" (DL) bezeichnet die Übertragungsrichtung von der Basisstation zum Terminal. Die Aufwärtsverbindung bzw. "Uplink" (UL) bezeichnet die entgegengesetzte Übertragungsrichtung vom Terminal zur Basisstation.

In Breitbandübertragungssystemen, wie beispielsweise einem UMTS-Mobilfunknetz ist ein Kanal ein Teilbereich einer zur Verfügung stehenden Gesamtübertragungskapazität. Als Funkkanal wird im Rahmen dieser Anmeldung ein drahtloser Kommunikationsweg bezeichnet.

In einem Mobilfunksystem, beispielsweise UMTS, gibt es für die Übertragung von Daten zwei Arten von physikalischen Kanälen: festzugeordnete Kanäle bzw. "Dedicated Channels" und gemeinsam benutzte bzw. "Common Channels". Bei den Dedicated Channels wird eine physikalische Ressource nur für die Übertragung von Informationen für ein bestimmtes Terminal reserviert. Bei den Common Channels können Informationen übertragen werden, die für alle Terminals gedacht sind, beispielsweise der primäre gemeinsame physikalische Steuerungskanal bzw. "Primary Common Control Physical Channel" (P-CCPCH) im Downlink, oder aber alle Terminals teilen sich eine physikalische Ressource. Dies ist der Fall beim HS-PDSCH, über den an ein Terminal in Abhängigkeit von der Verbindungsqualität zu dem Terminal Daten gesendet werden.

In Mobilfunksystemen wie beispielsweise gemäß dem UMTS sind neben leitungsvermittelten bzw. "circuit switched" Diensten, bei denen eine Verbindung während ihrer Zeitdauer fest allokiert ist, auch paketorientierte bzw. "packet switched" Dienste vorgesehen.

Für die zeitliche Koordination einer Datenübertragung oder von Signalisierungsprozeduren wird eine Übertragung in Zeitabschnitte, sogenannte Zeitschlitze bzw. "time slots" bzw. "slots" unterteilt. Ein Zeitschlitz weist im UMTS System eine Zeitdauer von 0,666 ms auf.

Ein weiterer Zeitabschnitt in UMTS insbesondere in Zusammenhang mit HSDPA ist ein sogenannter Teilrahmen bzw. "Subframe", der 3 Zeitschlitze beinhaltet. Ein Rahmen als weiterer Zeitabschnitt in UMTS beinhaltet 15 Zeitschlitze

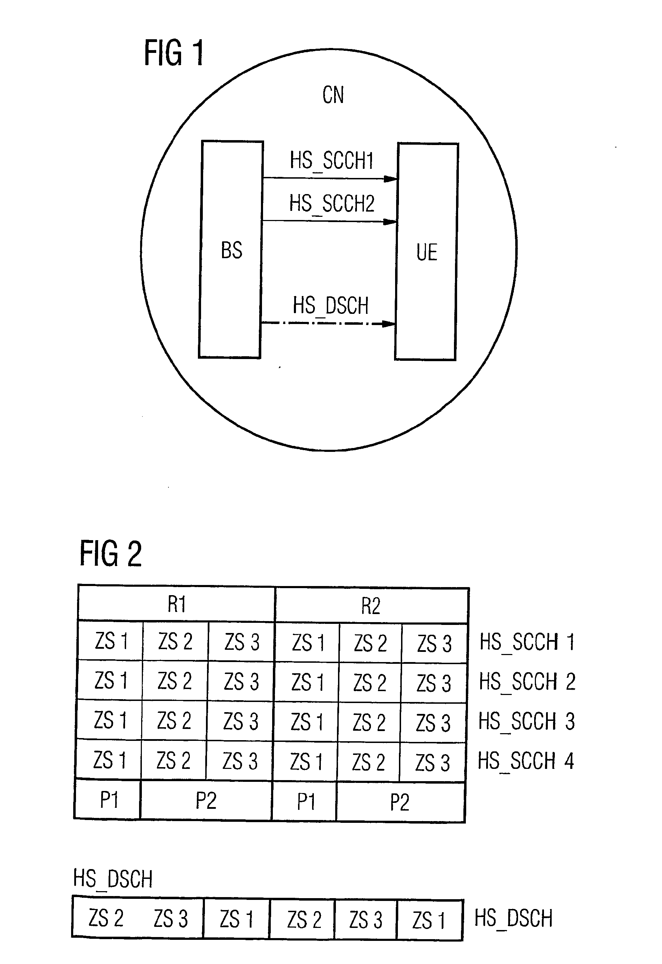

In Figur 1 ist ein Kommunikationsnetz CN zu sehen. Eine Basisstation sendet Daten über den Hochgeschwindigkeits-Abwärtsverbindungskanal bzw. "High-Speed Downlink Shared Channel" (HS-DSCH) als Datenkanal an ein Terminal bzw. eine Mobilstation UE. Eine Übertragung zeigt sie auf dem ersten Hochgeschwindigkeits-Kontrollkanal bzw. "High-Speed Shared Control Channel" HS-SCCH1 oder auf dem zweiten Hochgeschwindigkeits-Kontrollkanal HS_SCCH2 als Kontrollkanal an. In der Figur sind beispielhaft zwei Kontrollkanäle gewählt, es kann aber auch jede andere Anzahl größer als zwei gewählt werden. Das Terminal weist zumindest eine Sende/Empfangseinheit und eine Prozessoreinrichtung zur Verarbeitung von Daten auf.

Über die Kontrollkanäle wird Steuerinformation ausgesandt, die aus mehreren Steuerinformationsanteilen bestehen kann.

In Figur 2 ist eine beispielhafte zeitliche Struktur von Kontrollkanälen HS_SCCH1 bis HS_SCCH4 und einen Datenkanal HS_DSCH gezeigt.

Die vier Kontrollkanäle werden parallel von der Basisstation ausgesendet. Jeder der vier Kontrollkanäle HS_SCCH1 bis HS_SCCH4 weist einen ersten Teil P1 auf, auf dem ein erster Steuerinformationsanteil und einen zweiten Teil P2, auf dem ein zweiter Steuerinformationsanteil ausgesendet wird. Im ersten Teil P1 kann beispielsweise Kennzeichnungsinformation zur Kennzeichnung des Terminals untergebracht sein, beispielsweise die Identifikationsnummer des Terminals.

Es ist beispielhaft nur ein Datenkanal HS_DSCH aufgeführt Jeder der Kanäle ist in Teilrahmen unterteilt, von denen ein erster Teilrahmen R1 und ein zweiter Teilrahmen R2 exemplarisch dargestellt sind. Diese Teilrahmen sind weiterhin in je drei Zeitschlitze ZS1, ZS2 und ZS 3 unterteilt.

Der Datenkanal HS_DSCH ist gegenüber dem Kontrollkanal um 2 Zeitschlitze versetzt. Der erste Teil eines Kontrollkanals (HS_SCCH1 -HSCCH4) wird vor dem zugehörigen Datenkanal HS-DSCH gesendet, mit einem Abstand von einem Zeitschlitz zwischen dem Ende des Kontrollkanals (HS_SCCH1 -4) und dem Beginn des Datenkanals HS-DSCH. Der zweite Teil P2 des Kontrollkanals HS_SCCH überlappt mit dem zugehörigen Datenkanal HS-DSCH und zwar auf die Länge von einem Zeitschlitz.

Die im Folgenden geschilderten Ausführungsbeispiele beziehen sich auf den UMTS Standard, also ein UMTS-Mobilfunknetz.

Bei den Schilderungen werden die - bereits oben verwendeten-Abkürzungen direkt für die Bezeichnung der Kanäle verwendet. Die Anwendung der entsprechenden Verfahren kann aber auch auf auf andere Standards erfolgen, bei denen entsprechende Übertragungsverfahren vorgesehen sind. Es wird weiterhin auf die einleitenden Erklärungen insbesondere zur Konsistenzüberprüfung und auf folgende Abkürzungen verwiesen:
HSDPA: "High Speed Downlink Packet Access" bzw. hochratiger Daten Paketkanal in Abwärtsrichtung
HS-DSCH: "High-Speed Downlink Shared Channel (HSDPA DL data channel)" bzw. hochratiger gemeinsam genutzter abwärts Datenkanal
HS-SCCH: "High-Speed Shared Control Channel (HSDPA DL control channel)" bzw. hochratiger gemeinsam genutzter Kontrollkanal. Eine Mobilstation, die nur QPSK Modulation bei HSDPA unterstützt, kann durch zusätzliche Durchführung einer Konsistenzüberprüfung, wie eingangs geschildert bezüglich des Modulationsschemas in der an sie gerichteten HS-SCCH Informationseinheit die Falschalarmwahrscheinlichkeit verringern

Eine Mobilstation die eine an sie gerichtete HS-SCCH Informationseinheit empfängt führt insbesondere eine oder mehrere der im Folgenden aufgeführten Konsistenzüberprüfungen durch:
- Die Mobilstation soll überprüfen, ob die Information "pber", also die Anzahl der auf dem HS-DSCH verwendeten Channelisation-Codes kleiner oder gleich der maximal von ihr verarbeitbaren Codes ist
- Die Mobilstation soll überprüfen, ob das decodierte Modulationsschema entsprechend ihrer Fähigkeiten zulässig ist

Wenn mindestens eine der oben genannten Konsistenzüberprüfungen fehl schlägt, soll die Mobilstation auf der physikalischen Schicht die Daten verwerfen und sich so verhalten, als ob keine an sie gerichtete HS-SCCH Informationseinheit empfangen worden wäre, d.h. die Überwachung aller vier HS-SCCH im folgenden HS-SCCH Teilrahmen wird fortgesetzt. Dies ist auch zeitlich möglich da die beschriebenen Konsistenzüberprüfungen schon nach der Dekodierung des ersten HS-SCCH Zeitschlitzes durchgeführt werden können. Dies ist noch vor dem Zeitpunkt möglich, zu dem die Empfangsvorrichtungen zum Empfang des folgenden HS-SCCH Teilrahmen geschaltet werden müssen. Des weiteren können die Empfangsvorrichtungen erst dann auf den Empfang des HS-DSCH geschaltet werden, wenn diese Information vorliegen, da die Empfangseinrichtungen erst dann auf den Empfang der richtigen Channelisation-Codes bzw. Kanalkodierungsinformation geschaltet werden können. Weiter soll die Mobilstation überprüfen, ob die dekodierte HARQ Prozessnummer und die dekodiert Größe des angegebenen Transportblocks kleiner oder gleich den von den höheren Schichten über Signalisierung übermittelten Maximalwerten sind. Im Gegensatz zur den im vorigen Absatz besprochenen Überprüfungen kann diese Überprüfung erst nach dem Empfang des dritten Zeitschlitz des HS-SCCH Teilrahmens durchgeführt werden. Zu diesem Zeitpunkt wurden die Empfangseinrichtungen bereits auf den Empfang des HS-DSCH geschaltet, so dass es in diesem Fall nicht mehr möglich ist, statt des HS-DSCH alle vier HS-SCCH im folgenden HS-SCCH Teilrahmen zu überwachen. Wenn mindestens eine der Konsistenzüberprüfungen fehl schlägt, soll die Mobilstation (physikalische Schicht) die Daten verwerfen, selbst wenn Daten bereits (zumindest teilweise) auf dem HS-DSCH empfangen wurden.

Es sind insbesondere folgende Verfahren vorgesehen:
a) Ein Verfahren zur Datenübertragung in einem zellularen Funknetz, bei dem Datenpakete eines paketorientierten Datendienstes über einen gemeinsam von mehreren Mobilstationen genutzten Datenkanal übertragen werden (HS-DSCH) und zur Signalisierung für welche spezifische(n) Mobilstation(en) die Daten bestimmt sind (und weiterer Parameter) mehrere gemeinsam genutzte Steuerkanäle (HS-SCCH) verwendet werden, wobei der Datenkanal gegenüber den Steuerkanälen zeitlich verzögert ist.
b) Weiterhin ein Verfahren wie vorhergehend beschrieben, wobei nach Detektion des Empfangs einer HS-SCCH Informationseinheit auf einem der gemeinsam genutzten Steuerkanäle für eine Empfangseinheit im unmittelbar folgenden Teilrahmen lediglich auf dem Steuerkanal (HS-SCCH) empfangen wird, auf dem die unmittelbar vorhergehende Informationseinheit empfangen wurde.
   Eine Informationseinheit kann hier insbesondere als Steuerinformationsanteil betrachtet werden.
c) Weiterhin ein Verfahren wie vorhergehend beschrieben, wobei zumindest ein Teil der empfangenen HS-SCCH Informationseinheit einer Konsistenzüberprüfungen unterzogen wird und in dem Fall, dass mindestens eine Inkonsistenz festgestellt wird, werden die Daten nicht von der physikalischen Schicht an höhere Schichten weitergegeben. Inkonsistenz heißt insbesondere, dass die betreffende Information nicht vom Terminal verarbeitet werden kann.
d) Weiterhin ein Verfahren wie vorhergehend beschrieben wobei zumindest ein Teil eine detektierte HS-SCCH Informationseinheit einer Konsistenzprüfung unterzogen wird und bei Vorliegen einer Inkonsistenz im unmittelbar folgenden Teilrahmen auf mehreren Steuerkanälen (HS-SCCH) empfangen wird, beim nicht Vorliegen einer Inkonsistenz im unmittelbar folgenden Teilrahmen lediglich auf dem Steuerkanal (HS-SCCH) empfangen wird, auf dem im aktuellen Teilrahmen die HS-SCCH Informationseinheit detektiert wurde.
d1) Eine Weiterbildung davon ist insbesondere ein Verfahren wie vorhergehend beschrieben wobei zumindest zwei Teile (erster Teil, zweiter Teil) einer detektierten HS-SCCH Informationseinheit einer Konsistenzprüfung unterzogen werden und bei Vorliegen einer Inkonsistenz in einem Teil (erster Teil) die Daten nicht von der physikalischen Schicht an höhere Schichten weitergegeben werden und im unmittelbar folgenden Teilrahmen auf mehreren Steuerkanälen (HS-SCCH) empfangen wird, und bei Vorliegen einer Inkonsistenz in einem anderen Teil (zweiter Teil) nur die Daten nicht von der physikalischen Schicht an höhere Schichten weitergegeben werden.
d11) Dieses Verfahren kann dahingehend weitergebildet werden, dass beim nicht Vorliegen einer Inkonsistenz im unmittelbar folgenden Teilrahmen lediglich auf dem Steuerkanal (HS-SCCH) empfangen wird, auf dem im aktuellen Teilrahmen die HS-SCCH Informationseinheit detektiert wurde.
d2) Das Verfahren wie unter d) geschildert kann dahingehend weitergebildet werden, dass der eine Teil (erster Teil) zeitlich vor den Daten (HS-DSCH) gesendet wird und der andere Teil (zweiter Teil) zumindest teilweise zeitlich mit den Daten (HS-DSCH) überlappt oder zeitlich danach gesendet wird.
e) Jedes der Verfahren kann so weitergebildet werden, dass wobei eine Konsistenzüberprüfung die Anzahl der HS-DSCH Channelisation-Codes betrifft.
f) Weiterhin kann das Verfahren so modifiziert werden, dass eine Konsistenzüberprüfung das Modulationsschema betrifft.
g) Weiterhin kann eine Konsistenzüberprüfung der auf dem HS-SCCH dekodierten Information bezüglich der Anzahl der Datenbits, die von der physikalischen Schicht an die nächst höhere Schicht übergeben werden, und/oder der HARQ Prozessnummer durchgeführt werden. Unter der HARQ Prozessnummer versteht man hierbei die Prozessnummer zu einer spezifischen Übertragung, wenn mehrere HARQ Prozesse gleichzeitig ablaufen.

## Patentansprüche

1. Verfahren zur Datenübertragung zwischen einer Basisstation (BS) und einem Terminal (UE) in einem Kommunikationssystem (CN), bei dem
a) Daten zeitlich in Zeitabschnitte (ZS, R) oder Zeitrahmen (R) und Zeitschlitze (ZS), wobei ein Zeitrahmen (R) aus mehreren Zeitschlitzen (ZS) gebildet wird, unterteilt von der Basisstation (BS) an das Terminal (UE) über einen von mehreren Terminals (UE) gemeinsam benutzen Datenkanal (HS-DSCH) übertragen werden;
b) dem Terminal (UE) von der Basisstation (BS) über einen von zumindest zwei Steuerkanäle (HS-SCCH1, HS=SCCH2) durch eine ebenfalls in Zeitabschnitte (ZS, R) oder Zeitrahmen (R) und Zeitschlitze (ZS), wobei ein Zeitrahmen (R) aus mehreren Zeitschlitzen (ZS) gebildet wird, unterteilt ausgesendete Steuerinformation umfassend eine Mehrzahl von Steuerinformationsanteilen (P1,P2) mitgeteilt wird, wenn Daten über den Datenkanal (HS-DSCH) an das Terminal gesendet werden;
c) die zumindest zwei Steuerkanäle (HS-SCCH1, HS-SCCH2) durch das Terminal (UE) abgehört werden;
d) die Steuerinformation durch das Terminal (UE) auf einem ersten Steuerkanal der zumindest zwei Steuerkanäle (HS-SCCH1) in einem ersten Zeitabschnitt (ZS1, R1) oder in einem Zeitschlitz (ZS1) eines ersten Zeitrahmens (R1) empfangen wird;
e) ein Einzel-Entscheidungsparameter für jeden der Steuer-informationsanteile (P1,P2) auf Basis des Inhalts des jeweiligen Steuerinformationsanteils (P1,P2) generiert wird;
**gekennzeichnet durch** folgende Schritte:
f) Übermitteln eines ersten Steuerinformationsanteils (P1) zwei Zeitabschnitte vor einer eventuellen Übertragung der Daten auf dem Datenkanal (HS-DSCH) und eines zweiten Steuerinformationsanteil (P2) im nachfolgenden Zeitabschnitt oder den nachfolgenden Zeitabschnitte oder zwei Zeitschlitze vor einer eventuellen Übertragung der Daten auf dem Datenkanal (HS-DSCH) und eines zweiten Steuerinformationsanteil (P2) in einem dem ersten Zeitschlitz (ZS1) nachfolgenden Zeitschlitze oder in mehreren dem ersten Zeitschlitz (ZS1) nachfolgenden Zeitschlitzen;
g) Nichtweiterverarbeiten der Daten und Festlegen sämtlicher Steuerkanäle als abzuhörende Kanäle in dem direkt darauffolgenden Zeitabschnitt oder in einem dem ersten Zeitrahmen (R1) direkt nachfolgenden Zeitrahmen, wenn der zum ersten Steuerinformationsanteil (P1) gehörende erste Entscheidungsparameter negativ ist;
h) Nichtweitergeben oder Nichtweiteiverarbeiten der Daten und Festlegen nur des ersten Steuerkanals als abzuhörenden Kanal in dem direkt darauffolgenden Zeitabschnitt oder in einem dem erste Zeitrahmen (R1) direkt nachfolgenden Zeitrahmen, wenn der zum ersten Steuerinformationsanteil (P1) gehörende erste Entscheidungsparameter positiv ist und der zum zweiten Steuerinformationsahteil (P2) gehörende zweite Entscheidungsparameter negativ ist.

2. Verfahren nach Anspruch 1 mit folgenden weiteren Schritten:
i) Ermitteln eines Gesamtentscheidungsparameters auf Basis der einzelnen Entscheidungsparameter und
j) Verwerfen von auf dem Datenkanal (HS-DSCH) empfangenen Daten und der auf dem Steuerkanal (HS-SCCH1) empfängenen Information in Abhängigkeit vom Gesamt-Entscheidungsparameter.

3. Verfahren nach Anspruch 1 mit folgendem weiteren Schritt:
k) Festlegen des abzuhörenden Steuerkanals oder der abzuhörenden Steuerkanäle in einem (i) dem ersten Zeitabschnitt nachfolgenden Zeitabschnitt (ZS2, R2) bzw. (ii) dem ersten Zeitrahmen nachfolgenden Zeitrahmen (R2) in Abhängigkeit vom Gesamt-Entscheidungsparameter, insbesondere weiteres Abhören der zumindest zwei Steuerkanäle (HS-SCCH1, HS-SCCH2).

4. Verfahren nach Anspruch 2, bei dem in Schritt i) ein positiver Gesamt-Entscheidungsparameter generiert wird, wenn die Steuerinformation als das Terminal betreffend eingestuft wird und sein negativer Gesamtentscheidungsparameter, wenn die Steuerinformation als das Terminal nicht betreffend eingestuft wird.

5. Verfahren nach Anspruch 3, bei dem in.Schritt k) nur der erste Steuerkanal (HS-SCCH1) als abzuhörender Steuerkanal festgelegt wird, wenn ein positiver Gesamt-Entscheidungsparameters vorliegt und alle Steuerkanäle als abzuhörende Steuerkanäle festgelegt werden, wenn ein negativer Gesamtentscheidungsparameter vorliegt.

6. Verfahren nach einem der vorhergehenden Ansprüche, bei dem ein positiver Entscheidungsparameter generiert wird, wenn der Steuerinformationsanteil (P1, P2) als das Terminal (UE) betreffend eingestuft wird und ein negativer Entscheidungsparameter, wenn der Steuerinformationsanteil (P1,P2) als das Terminal (UE) nicht betreffend eingestuft wird.

7. Verfahren nach Anspruch 2, bei dem in Schritt i) der Gesamt-Entscheidungsparameter als positiv ermittelt wird, wenn alle Entscheidungsparameter positiv sind.

8. Verfahren nach Anspruch 3, bei dem (i) der nachfolgende Zeitabschnitt in Schritt k) der dem ersten Zeitabschnitt (ZS1, R1) unmittelbar nachfolgende Zeitabschnitt (ZS2, R2) bzw. (ii) der nachfolgende Zeitrahmen in Schritt k) der dem ersten Zeitrahmen(R1) unmittelbar nachfolgende Zeitrahmen (R2) ist.

9. Verfahren nach einem der vorhergehenden Ansprüche, bei dem die Übertragung von Daten über den Datenkanal (HS-DSCH) in Paketen erfolgt, deren-Größe insbesondere festgelegt ist.

10. Verfahren nach einem der vorhergehenden Ansprüche, bei dem der erste Steuerinformationsanteil (P1) eine Kennzeichnung des Terminals enthält und der zweite -Steuerinformationsanteil (P2) eine Kanalkonfigurations-Information oder/und eine HARQ-Information oder/und Informationen über die Größe eines Paketes oder/und das Modulations- und Codierungsschema enthält.

11. Verfahren nach einem der einem der vorhergehenden Ansprüche, bei dem beim Vorliegen eines positiven Gesamt-Entscheidungsparameters die Datenübertragung über den Datenkanal (HS-DSCH) zeitlich verzögert, insbesondere mit einer Zeitverzögerung von (i) 2 Zeitabschnitten relativ zum Zeitabschnitt bzw. (ii) 2 Zeitschlitzen relativ zum Zeitschlitz, in dem jeweils die Steuerinformation beginnt, erfolgt.

12. Verfahren nach einem der vorhergehenden Ansprüche, bei dem beim Vorliegen eines negativen Gesamt-Entscheidungsparameters die Daten nicht weiterverarbeitet werden, insbesondere nicht an Schichten oberhalb der physikalischen Schicht des QSI Modells weitergegeben werden.

13. Terminal (UE) mit einer Empfangseinrichtung zur Datenübertragung und einer Prozessoreinheit, die derart eingerichtet ist, dass das Verfahren nach einem der Ansprüche 1 bis 12 durchgeführt wird.

14. Kommunikationsnetz (CN), insbesondere ein zellulares Mobilfunknetz, mit einer Basisstation (BS) und einem Terminal (UE) nach Anspruch 13.

## Claims

1. Method for data transmission between a base station (BS) and a terminal (UE) in a communication system (CN), in which
a) data is transmitted timed subdivided into time segments (ZS, R) or time frames (R) and time slots (ZS), wherein a time frame (R) is formed of a number of time slots (ZS), from the base station (BS) to the terminal (UE) over a data channel (HS_DSCH) shared by a number of terminals (UE);
b) the terminal (UE) is notified by the base station (BS) via one of at least two control channels (HS_SCCH1, HS_SCCH2) through control information also subdivided into time slots (ZS, R) or time frames (R) and time slots (ZS), wherein a time frame (R) is formed of a number of time slots (ZS), comprising a number of pieces of control information (P1, P2), as to whether data is to be sent on the data channel (HS_DSCH) to the terminal
c) the at least two control channels (HS_SCCH1, HS_SCCH2) are listened in on by the terminal (UE);
d) the control information is received by the terminal (UE) on a first control channel of the at least two control channels (HS_SCCH1) in a first time segment (ZS1, R1) or in a time slot (ZS1) of a first time frame (R1) ;
e) an individual decision parameter for each of the pieces of control information (P1, P2) is generated on the basis of the content of the relevant piece of control information (P1, P2);
**characterised by** the following steps:
f) transmitting a first piece of control information (P1) to two time segments before a possible transmission of data to the data channel (HS-DSCH) and a second piece of control information (P2) in the subsequent time segment or the subsequent time segments or two time slots before a possible transmission of data to the data channel (HS-DSCH) and a second piece of control information (P2) in a time slot subsequent to the first time slot (ZS1) or in a number of time slots subsequent to the first time slot (ZS1);
g) not processing the data any further and defining all control channels as channels to be monitored in the time segment directly following or in a time frame directly following the first time frame (R1), if the first decision parameter belonging to the first piece of control information (P1) is negative;
h) not passing on or not processing the data any further and defining only the first control channel as a channel to be monitored in the time segment directly following or in a time frame directly following the first time frame (R1), if the first decision parameter belonging to the first piece of control information (P1) is positive and the second decision parameter belonging to the second piece of control information (P2) is negative.

2. Method according to claim 1 with the following further steps:
i) Determining an overall decision parameter on the basis of the individual decision parameters and
j) Rejecting the data received on the data channel (HS_DSCH) and the information received on the control channel (HS_SCCH1) depending on the overall decision parameter.

3. Method according to claim 1 with the following further step:
k) Defining the control channel or control channels to be monitored in a (i) time segment (ZS2, R2) following the first time segment or (ii) time frame (R2) following the first time frame depending on the overall decision parameter, especially further monitoring of the at least two control channels (HS_SCCH1, HS_SCCH2).

4. Method according to claim 2, in which in step i) a positive overall decision parameter is generated if the control information is classified as relating to the terminal and a negative overall decision parameter if the control information is classified as not relating to the terminal.

5. Method according to claim 3, in which in step k) only the first control channel (HS_SCCH1) is defined as the control channel to be monitored, if a positive overall decision parameter is present and all control channels are defined as control channels to be monitored if a negative overall decision parameter is present.

6. Method according to one of the preceding claims, in which a positive decision parameter is generated if the piece of control information (P1, P2) is classified as relating to the terminal (UE) and a negative decision parameter, if the piece of control information (P1,P2) is classified as not relating to the terminal (UE).

7. Method according to claim 2, in which in step i) the overall decision parameter is determined as positive if all decision parameters are positive.

8. Method according to claim 3, in which (i) the subsequent time segment in step k) is the time segment (ZS2, R2) directly following the first time segment (ZS1, R1) or (ii) the subsequent time frame is the time frame (R2) directly following the first time frame (R1).

9. Method according to one of the preceding claims, in which the data is transmitted over the data channel (HS_DSCH) in packets, the size of which is especially determined.

10. Method according to one of the preceding claims, in which the first piece of control information (P1) contains an identification of the terminal and the second piece of control information (P2) contains channel configuration information or/and HARQ information or/and information about the size of a packet or/and the modulation and coding scheme.

11. Method according to one of the preceding claims, in which, if a positive overall decision parameter is present, the data transmission via the data channel (HS_DSCH) is delayed in time, especially with a time delay of (i) 2 time segments relative to the time segment or (ii) 2 time slots relative to the time slot in which the control information begins.

12. Method according to one of the preceding claims, in which, if a negative overall decision parameter is present, the data is not further processed, especially not passed on to layers above the physical layer of the OSI model.

13. Terminal (UE) with a receive device for data transmission and a processor unit which is set up so that the method according to one of claims 1 to 12 is executed.

14. Communication network (CN), especially a cellular mobile radio network, with a base station (BS) and a terminal (UE) according to claim 13.

## Revendications

1. Procédé de transmission de données entre une station de base (BS) et un terminal (UE) dans un système de communication (CN), selon lequel :
a) des données sont transmises de la station de base (BS) au terminal (UE) via un canal de données (HS-DSCH) utilisé conjointement par plusieurs terminaux (UE) de manière répartie temporellement en tranches de temps (ZS, R) ou trames temporelles (R) et créneaux temporels (ZS), une trame temporelle (R) étant composée de plusieurs créneaux temporels (ZS) ;
b) la station de base (BS) informe le terminal (UE), via l'un d'au moins deux canaux de commande (HS-SCCH1, HS-SCCH2), par une information de commande comprenant une pluralité de parties d'informations de commande (P1, P2) et également émise de manière répartie en tranches de temps (ZS, R) ou trames temporelles (R) et créneaux temporels (ZS), une trame temporelle (R) étant composée de plusieurs créneaux temporels (ZS), lorsque des données sont envoyées au terminal via le canal de données (HS-DSCH) ;
c) les au moins deux canaux de commande (HS-SCCH1, HS-SCCH2) sont écoutés par le terminal (UE) ;
d) l'information de commande est reçue par le terminal (UE) sur un premier canal de commande des au moins deux canaux de commande (HS-SCCH1) dans une première tranche de temps (ZS1, R1) ou dans un créneau temporel (ZS1) d'une première trame temporelle (R1) ;
e) un paramètre de décision individuel est généré pour chacune des parties d'information de commande (P1, P2) sur la base du contenu de la partie d'information de commande respective (P1 P2) ;
**caractérisé par** les étapes suivantes :
f) transmission d'une première partie d'information de commande (P1) deux tranches de temps avant une éventuelle transmission des données sur le canal de données (HS-DSCH) et d'une deuxième partie d'information de commande (P2) dans la tranche de temps suivante ou les tranches de temps suivantes ou deux créneaux temporels avant une éventuelle transmission des données sur le canal de données (HS-DSCH) et d'une deuxième partie d'information de commande (P2) dans un créneau temporel faisant suite au premier créneau temporel (ZS1) ou dans plusieurs créneaux temporels faisant suite au premier créneau temporel (ZS1) ;
g) non-traitement subséquent des données et détermination de tous les canaux de commande en tant que canaux à écouter dans la tranche de temps faisant directement suite ou dans une trame temporelle faisant directement suite à la première trame temporelle (R1) lorsque le premier paramètre de décision faisant partie de la première partie d'information de commande (P1) est négatif ;
h) non-communication ou non-traitement subséquent des données et détermination uniquement du premier canal de commande en tant que canal à écouter dans la tranche de temps faisant directement suite ou dans une trame temporelle faisant directement suite à la première trame temporelle (R1) lorsque le premier paramètre de décision faisant partie de la première partie d'information de commande (P1) est positif et le deuxième paramètre de décision faisant partie de la deuxième partie d'information de commande (P2) est négatif.

2. Procédé selon la revendication 1, comportant les étapes supplémentaires suivantes :
i) détermination d'un paramètre de décision global sur la base des différents paramètres de décision et
j) rejet de données reçues sur le canal de données (HS-DSCH) et de l'information reçue sur le canal de commande (HS-SCCH1) en fonction du paramètre de décision global.

3. Procédé selon la revendication 1, comportant l'étape supplémentaire suivante :
k) détermination du canal de commande à écouter ou des canaux de commande à écouter dans une (i) tranche de temps (ZS2, R2) faisant suite à la première tranche de temps resp. dans des (ii) trames temporelles (R2) faisant suite à la première trame temporelle en fonction du paramètre de décision global, et, plus particulièrement, écoute supplémentaire des au moins deux canaux de commande (HS-SCCH1, HS-SCCH2).

4. Procédé selon la revendication 2, selon lequel sont générés, à l'étape i), un paramètre de décision global positif lorsque l'information de commande est classée comme concernant le terminal et un paramètre de décision global négatif lorsque l'information de commande est classée comme ne concernant pas le terminal.

5. Procédé selon la revendication 3, selon lequel sont déterminés, à l'étape k), uniquement le premier canal de commande (HS-SCCH1) en tant que canal de commande à écouter en présence d'un paramètre de décision global positif et tous les canaux de commande en tant que canaux de commande à écouter en présence d'un paramètre de décision global négatif.

6. Procédé selon l'une des revendications précédentes, selon lequel sont générés un paramètre de décision positif lorsque la partie d'information de commande (P1, P2) est classée comme concernant le terminal (UE) et un paramètre de décision négatif lorsque la partie d'information de commande (P1, P2) est classée comme ne concernant pas le terminal (UE).

7. Procédé selon la revendication 2, selon lequel le paramètre de décision global est déterminé comme étant positif, à l'étape i), lorsque tous les paramètres de décision sont positifs.

8. Procédé selon la revendication 3, selon lequel (i) la tranche de temps suivante est, à l'étape k), la tranche de temps (ZS2, R2) faisant directement suite à la première tranche de temps (ZS1, R1) ou (ii) la trame temporelle suivante est, à l'étape k), la trame temporelle (R2) faisant directement suite à la première trame temporelle (R1).

9. Procédé selon l'une des revendications précédentes, selon lequel la transmission de données sur le canal de données (HS-DSCH) s'effectue en paquets dont la taille est particulièrement déterminée.

10. Procédé selon l'une des revendications précédentes, selon lequel la première partie d'information de commande (P1) contient une identification du terminal et la deuxième partie d'information de commande (P2) contient une information de configuration de canal ou/et une information HARQ ou/et des informations sur la taille d'un paquet ou/et le schéma de modulation et de codage.

11. Procédé selon l'une des revendications précédentes, selon lequel, en présence d'un paramètre de décision global positif, la transmission de données sur le canal de données (HS-DSCH) s'effectue avec un retard temporel, et plus particulièrement avec un retard temporel de (i) 2 tranches de temps relativement à la tranche de temps resp. (ii) 2 créneaux temporels relativement au créneau temporel, dans lequel l'information de commande commence, respectivement.

12. Procédé selon l'une des revendications précédentes, selon lequel, en présence d'un paramètre de décision global négatif, les données ne subissent pas de traitement subséquent et ne sont notamment pas communiquées à des couches situées au-dessus de la couche physique du modèle OSI.

13. Terminal (UE) comportant un dispositif de réception pour la transmission de données et une unité de processeur qui est configurée pour permettre l'exécution du procédé selon l'une des revendications 1 à 12.

14. Réseau de communication (CN), en particulier réseau radio mobile cellulaire, comportant une station de base (BS) et un terminal (UE) selon la revendication 13.
